Europäisches Patentamt

European Patent Office

Office européen des brevets

(11) Veröffentlichungsnummer: **0 210 420**
A1

# EUROPÄISCHE PATENTANMELDUNG

(21) Anmeldenummer: 86108446.5

(22) Anmeldetag: 20.06.86

(51) Int. Cl.⁴: **B 60 S 1/32**
**B 29 C 45/14**

(30) Priorität: 19.07.85 DE 3525739

(43) Veröffentlichungstag der Anmeldung:
04.02.87 Patentblatt 87/6

(84) Benannte Vertragsstaaten:
FR GB IT

(71) Anmelder: SWF Auto-Electric GmbH
Stuttgarter Str. 119
D-7120 Bietigheim-Bissingen(DE)

(72) Erfinder: Fuchsberger, Peter
Winkelhoferstrasse 29
D-7930 Ehingen(DE)

(72) Erfinder: Krizek, Oldrich
Camberly-Strasse 85
D-7120 Bietigheim-Bissingen(DE)

(72) Erfinder: Prohaska, Hans
Nelkenweg 44
D-7120 Bietigheim-Bissingen(DE)

(54) Wischarm, Insbesondere für Wischanlagen an Kraftfahrzeugen und Verfahren zu seiner Herstellung.

(57) Die Erfindung betrifft einen Wischarm mit einer Wischstange (50) und einer Windleitschaufel (70) wobei die Wischstange (50) in der Windleitschaufel (70) eingebettet ist und die Herstellung dieser Kombination. Der Wischarm (50) erfüllt in aerodynamischer, sicherheitstechnischer und stilistischer Hinsicht erhöte Ansprüche.

Fig. 1

Croydon Printing Company Ltd.

0210420

## Wischarm, insbesondere für Wischanlagen an Kraftfahrzeugen und Verfahren zu seiner Herstellung

Die Erfindung betrifft einen Wischarm gemäß den Merkmalen des Oberbegriffs des Anspruchs 1.

Ein derartiger Wischarm ist beispielsweise aus dem DE-GM 78 26 802 bekannt. Die Windleitschaufel weist hier einen nutförmigen Aufnahmekanal auf, dessen Querschnitt dem Querschnitt der Wischstange angepaßt ist. Weiterhin ist die Windleitschaufel mit einigen elastisch auslenkbaren Rasthaken versehen, welche an der überall eben ausgebildeten Oberfläche der Wischstange anliegen. Durch die Rasthaken werden aber das aerodynamische Verhalten sowie das Aussehen des Wischarms ungünstig beeinflußt. Außerdem entspricht diese Einbettungsart hinsichtlich der Sicherheit nicht immer allen Anforderungen. Wenn der Wischarm nach dem DE-GM 78 26 802 bei sehr leistungsstarken bzw. stark belasteten Wischanlagen zum Einsatz kommt und die Windleitschaufel entsprechend groß ausgebildet ist, tritt manchmal ein vorübergehendes Auslenken der Rasthaken auf. Dadurch ist zum einen keine lange Gebrauchsdauer der Windleitschaufel gewährleistet, weil die Rasthaken an Federvermögen verlieren können und zum anderen treten störende Knackgeräusche während dem Auslenken der Rasthaken auf.

Aufgabe der Erfindung ist es, einen Wischarm der eingangs genannten Art derart weiterzubilden, daß er in aerodynamischer, stilistischer und sicherheitstechnischer Hinsicht erhöhte Ansprüche erfüllt. Weiterhin soll der Wischarm kostengünstig herstellbar sein und eine lange Gebrauchsdauer erwarten lassen.

Diese Aufgabe wird von einem Wischarm gelöst, welcher die im kennzeichnenden Teil des Anspruchs 1 aufgeführten Merkmale aufweist. Hier ist die die Wischstange in dem Bereich, wo sich die Windleitschaufel erstreckt, nahezu überall rundum und damit sehr sicher in die Windleitschaufel eingebettet. Dabei sind keine abstehenden Haltemittel vorhanden, an denen ein Gegenstand oder eine Person ungewollt hängenbleiben könnte oder an denen der Fahrtwind verwirbelt werden könnte. Weiterhin ergibt sich bei der neuen Einbettungsart ein vorteilhaftes Aussehen der aus Wischstange und Windleitschaufel gebildeten Baueinheit. Die Wischstange ist dabei in dem Bereich, wo sich die Windleitschaufel erstreckt, rundum unsichtbar. Deshalb ist keine Oberflächenbearbeitung der Wischstange in dem Bereich erforderlich, wo sich die Windleitschaufel erstreckt. Die in der Windleitschaufel vorgesehene Aussparung ermöglicht dabei die Einbettung der Wischstange in eine große Menge von Windleitschaufelmaterial mittels eines Verfahrens, bei dem große Druckkräfte auf die Wischstange wirken, beispielsweise mittels eines Spritzgußverfahrens oder eines Druckgußverfahrens, ohne daß sich die Wischstange verbiegt, weil in der Werkzeugform Mittel angeordnet werden können, an denen sich die Wischstange abstützt. Aber auch wenn ein Verfahren zur Einbettung der Wischstange zur Anwendung kommt, wo keine großen Druckkräfte auf die Wischstange wirken, beispielsweise wenn die Windleitschaufel aus einem gießbaren, selbst aushärtenden Zweikomponentengemisch auf Kunstharzbasis hergestellt werden soll, ist die Aussparung von Vorteil. Hier können dann Mittel an der Werkzeugform angeordnet werden, mit denen die umgossene Wischstange ohne Schwierigkeiten aus der Werkzeugform ausgestoßen werden kann.

Die Aussparung genügt den Anforderungen und beeinflußt das Aussehen des Wischarms besonders wenig, wenn Anspruch 3 zur Anwendung kommt.

Eine besonders sichere Abstützung der Wischstange in einer Werkzeugform ist gewährleistet, wenn Anspruch 4 verwirklicht wird.

Wenn die Aussparung gemäß Anspruch 5 angeordnet wird, ist sie aus einer wichtigen Blickrichtung nicht sichtbar.

Das aerodynamische Verhalten des Wischarms ist besonders günstig, wenn die Ansprüche 6 und 7 zur Anwendung kommen.

Ein absolut sicherer Halt auch einer sehr großen Windleitschaufel und selbst bei höchsten Belastungen ist gewährleistet, wenn die Erfindung gemäß Anspruch 8 weitergebildet ist. Die Ausformung kann dabei als Zahn, Ausnehmung oder Vorsprung ausgebildet sein.

A 12 880

0210420

Dabei werden Weiterbildungen gemäß Anspruch 9 bevorzugt, weil durch eine solche an der Wischstange vorgesehene Ausformung auf einfache Weise eine sich um den gesamten Umfang der Wischstange erstreckende Windleitschaufel angebracht werden kann, die absolut sicher an der Wischstange hält.

Besondere Vorteile hinsichtlich der Kostengünstigkeit der Baueinheit sowie der Verformungsbeständigkeit der Windleitschaufel sind gegeben, wenn Anspruch 10 zur Anwendung kommt.

Wenn die Wischstange, wie an sich bekannt, gemäß Anspruch 11 aus einem Federbandstahl besteht, ist deren Einbettung in die Windleitschaufel problemlos möglich, da dieser Werkstoff alle Anforderungen hinsichtlich der mechanischen und/oder thermischen Beständigkeit erfüllt, die beim Einbettungsvorgang an die Wischstange gestellt werden.

Weitere Vorteile werden erzielt, wenn Anspruch 12 zur Anwendung kommt. Dann kann auf die Verwendung eines korrosionsbeständigen Werkstoffs für die Wischstange verzichtet werden, weil der Schutzüberzug die Aufgabe eines Korrosionsschutzes übernehmen kann. Dabei ist nur wenig Schutzüberzugmaterial zur Verkleidung der Wischstange nötig, weil nur deren freiliegende, d.h. nicht von der Windleitschaufel umgebene Oberfläche bedeckt ist. Dadurch, daß sich der Schutzüberzug sowohl über die freiliegende Oberfläche der Wischstange als auch über die freiliegende Oberfläche der Windleitschaufel erstreckt, wird ein einheitlicher farblicher Anblick sowie ein einheitlicher Korrosionsschutz der aus den beiden Bauteilen bestehenden Baueinheit erzielt.

Dabei werden Weiterbildungen besonders bevorzugt, bei denen einer der Ansprüche 12 bis 15 sowie Anspruch 3 zur Anwendung kommt. Die kegelförmige Gestalt der Aussparungen ermöglicht ein problemloses Aufbringen des Schutzüberzuges auf die Mantelfläche der Aussparungen und auf die im Bereich der Aussparungen freiliegende Oberfläche der Wischstange.

Zur Herstellung des neuen Wischarms wird vorgeschlagen, eine zweiteilige Werkzeugform mit mehreren Mulden in beiden Werkzeugformteilen zu verwenden, die nach dem Schließen der Werkzeugform jeweils paarweise einen Hohlraum bilden, welcher den Umriß einer Windleitschaufel hat und wenigstens einen

0210420 SWF

Vorsprung aufweist, an dem die Wischstange anliegt. So ist eine rationelle, kostengünstige Herstellung von Baueinheiten gewährleistet, die aus Wischstange und Windleitschaufel bestehen.

Eine bewegliche Lagerung des Vorsprungs gemäß Anspruch 17 kann die Entnahme der Baueinheiten erleichtern.

Weiter wird vorgeschlagen, die Wischstangen gemäß Anspruch 19 ohne vorherige Oberflächenbearbeitung wie beispielsweise Lackierung in Windleitschaufelmaterial einzubetten. So wird ein unnötiger Material- und Arbeitsaufwand vermieden.

Nachstehend wird die Erfindung anhand eines Ausführungsbeispieles in einer Zeichnung näher erläutert. Dabei ist dargestellt in

Fig. 1   ein Wischarm in Ansicht von unten, in

Fig. 2   eine Querschnittsansicht durch den in Fig. 1 gezeigten Wischarm
und 3   entlang der Linie II-II bzw. III-III in vergrößerter
Darstellung und in

Fig.4   eine zur Herstellung des Wischarms geeignete Werkzeugform in Querschnittsansicht.

Der Wischarm besteht, wie an sich bekannt, aus einem wannenförmigen Gelenkteil 10, das aus einer Blechplatine gebogen und an einem hinteren Ende 11 über einen Gelenkniet 20 an einem Befestigungsteil 30 angelenkt ist, welches bei 31 drehfest mit einer nicht dargestellten Wischerwelle verbunden werden kann. Am Gelenkniet 20 ist eine Schraubenfeder 40 mit ihrem hinteren Ende 41 angehängt, die seitlich des Befestigungsteilbereichs 31 verläuft und mit ihrem vorderen Ende 42 an einer aus einem Federbandstahl bestehenden Wischstange 50 festgelegt ist. Dazu ist in das hintere Ende 51 der Wischstange 50 ein Einhängeloch 60 für die Schraubenfeder 40 eingelassen. Das Gelenkteil 10 umgreift mit seinem vorderen, schmaleren Ende 12 formschlüssig das hintere Ende 51 der Wischstange 50. Das vordere Ende 52 der Wischstange 50 ist zuerst bei 53 zur Seite gekrümmt und anschließend zu einer U-förmigen Haken 54 gebogen, an dem auf bekannte Weise ein nicht dargestelltes Wischblatt angelenkt werden kann.

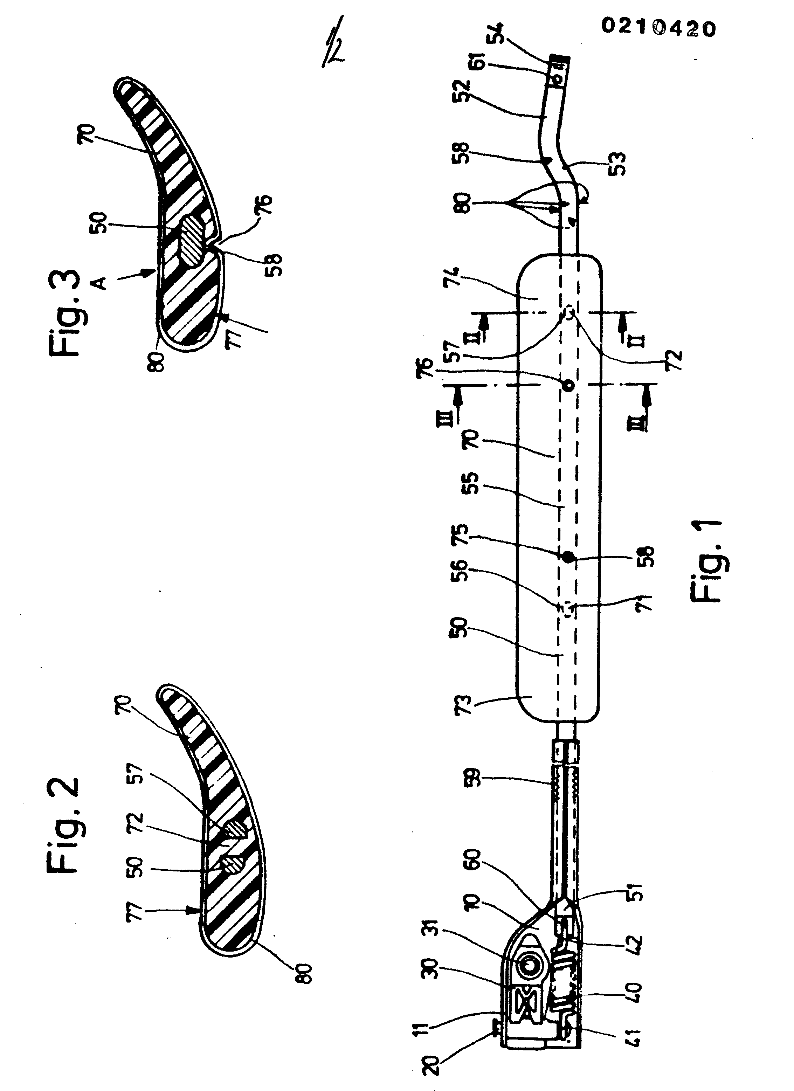

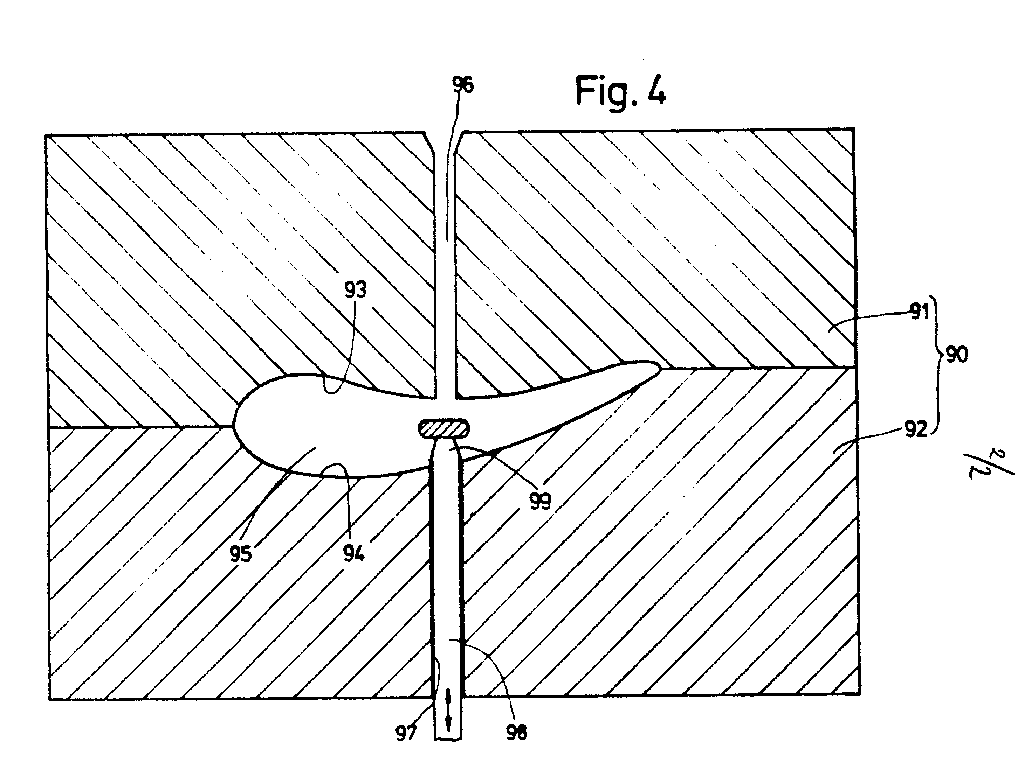

Wesentlich bei dem Wischarm ist, daß seine Wischstange 50 an einem zwischen den beiden Enden 53 und 54 liegenden, sich etwa über zwei Drittel der gesamten Wischstangenlänge erstreckenden Bereich 55 in eine Windleitschaufel 60 eingebettet ist, welche eine etwa tragflügelförmige Gestalt besitzt und die Wischstange 50 um den gesamten Umfang umgibt, wie die Fig. 2 zeigt. Die Windleitschaufel 70 besteht aus einem spritzgegossenen Polyamid. Der sichere Halt der Windleitschaufel 70 an der Wischstange 50 ist, wie die Fig. 1 und 2 zeigen, dadurch gewährleistet, daß die beiden Bauteile 50 und 70 mit mehreren miteinander korrespondierenden Ausformungen 56,57 bzw. 71,72 versehen sind. Die Ausformungen 56,57 an der Wischstange 50 sind dabei relativ nahe der beiden äußeren Enden 73 und 74 der Windleitschaufel 70 angeordnet und als zylindrische Durchbrüche ausgebildet. Die Ausformungen 71,72 an der Windleitschaufel 70 füllen die Durchbrüche 56,57 in der Wischstange 50 vollständig aus und gehen einstückig in das unterhalb bzw. oberhalb der Wischstange 50 liegende Windleitschaufelmaterial über. Dadurch liegt eine unlösbare formschlüssige Verbindung zwischen Windleitschaufel 70 und Wischstange 50 vor. Wie die Fig. 1 und 3 zeigen, besitzt die Windleitschaufel 70 an zwei Stellen, die jeweils am Ende eines Drittels der Windleitschaufellänge liegen, jeweils eine kleine kegelförmige Aussparung 75 bzw. 76, die bis zur Oberfläche 58 der Wischstange 50 reicht. Die Aussparungen 75 und 76 sind bei der Herstellung der Windleitschaufel 70 entstanden, weil die Werkzeugform, mittels welcher die Wischstange 50 in das Windleitschaufelmaterial (hier: Polyamid) eingebettet wurde, zwei Vorsprünge besessen hat, an der sich die Wischstange 50 abstützen könnte, während das Polyamid in die Werkzeugform eingespritzt wurde. Das Verfahren wird nachstehend anhand der in Fig. 4 näher erläutert. An dieser Stelle wird zunächst die Ausgestaltung der fertigen Baueinheit weiter erläutert.

Die kegelförmigen Aussparungen 75 und 76 sind beide auf der der Windanströmrichtung A abgekehrten Seite der Windleitschaufel 70 angeordnet. Die Spitze der Kegel zeigt dabei in Richtung der Wischstange 50. Der größte Kegeldurchmesser ist dabei etwa halb so groß wie die Ausdehnung der Wischstange 50 quer zur Wischarmlängsrichtung. Somit ist nur ein ganz geringer Teil der Oberfläche 58 der Wischstange 50 nicht in Windleitschaufelmaterial eingebettet.

A 12 880                     - 16 -
                                 6

Wie in der Fig. 2 und 3 weiter angedeutet ist, ist die Windleitschaufel 70 an ihrer äußeren Oberfläche 77 mit einem Schutzüberzug 80 versehen, der aus einem Lack besteht. Die Wischstange 50 ist auf dem freiliegenden, d.h. nicht von der Windleitschaufel 70 bedeckten Bereich ihrer Oberfläche 58 und damit auch im Bereich der Aussparungen 75 und 76 mit dem gleichen Schutzüberzug 80 versehen, was in den Fig. 1 und 3 angedeutet ist. Die übrigen Bauteile 10, 20, 30 und 40 des Wischarms sind ebenfalls mit dem Schutzüberzug 80 versehen. Der Wischarm bietet somit über die gesamte Länge einen einheitlich farblichen Anblick mit überall gleichem Glanzgrad und besitzt überall einen sehr guten Korrosionsschutz.

Der Wischarm ist dabei folgendermaßen hergestellt worden:

Aus einer Blechplatine, welche aus einem 3mm dicken Federbandstahl besteht, wird gleichzeitig eine Vielzahl von 9mm breiten, 530mm langen Wischstangen 50 mit jeweils zwei Durchbrüchen 56 und 57 sowie jeweils einem Einhängeloch 60, einem Rastdurchbruch 61 für das Wischblatt-Verbindungsstück und mehreren seitlich angeordneten Zähnen 59 ausgestanzt. Anschließend werden die Wischstangen 50 in die aus Fig. 1 ersichtliche Gestalt gebogen.

Danach werden die Wischstangen 50 ohne vorherige Oberflächenbearbeitung in einer in Fig. 4 andeutungsweise im Querschnitt dargestellten Spritzgußform 90 positioniert, die aus zwei übereinander angeordneten Teilen 91 und 92 besteht, und in Windleitschaufelmaterial eingebettet. In die beiden Teile 91, 92 sind jeweils mehrere Mulden eingelassen, von denen zwei, nämlich die Mulden 93 und 94 dargestellt sind. Nach dem Schließen der Form 90 bilden die beiden Mulden 93 und 94 einen Hohlraum 95, dessen Umriß dem Umriß der Windleitschaufel entspricht. In ihrem Oberteil 91 besitzt die Form 90 einen zu dem Hohlraum 95 führenden Spritzkanal 96, welcher so lang ist, wie es die vorgesehene Länge der Windleitschaufel erfordert. An zwei dem Spritzkanal 96 gegenüberliegenden, jeweils etwa am Ende eines Drittels der vorgesehenen Windleitschaufellänge liegenden Stellen besitzt das Unterteil 92 der Form zwei Bohrungen, von denen eine, die mit dem Bezugszeichen 97 bezeichnet ist, in Fig. 4 dargestellt ist. In jeder Bohrung 97 ist ein Stößel 98 in der Höhe verschiebebeweglich, aber feststellbar gelagert, der ein kegelförmiges oberes Ende 99 besitzt, welches in den Hohlraum 95 vorspringt. Die Wischstange 50 liegt auf den vorspringenden Enden 99 auf. Die Stößel 98 sind dabei so positioniert, daß die Wischstange 50 auf der halben Höhe des Hohlraums 95 liegt. Nun wird Polyamid in warmem Zustand durch den Spritzkanal 96 in den Hohlraum 95 gedrückt, bis dieser vollständig gefüllt ist. Die vorspringenden Enden 99 der Stößel 98 wirken dabei dem Spritzdruck entgegen, halten die Wischstange 50 in der vorgesehenen Lage und verhindern ein unerwünschtes Durchbiegen der Wischstange 50. Nach der Beendigung des Spritzvorganges werden die Stößel 98 aus dem nunmehr gefüllten Hohlraum 95 zurückgezogen und es wird das Oberteil 91 der Form 90 vom Unterteil 92 entfernt.

Die umspritzten Wischstangen 50 werden entnommen und jeweils mit dem hinteren Ende 51 auf ein entsprechend dem Umriß des Gelenkteils 10 ausgestanztes, relativ weiches Blechplatinenstück gelegt, welches anschließend in die aus Fig. 1 ersichtliche Gestalt gebogen wird. Dabei graben sich die an der Wischstange 50 befindlichen Zähne 59 in das Gelenkteilmaterial ein, so daß eine formschlüssige Verbindung zwischen dem hinteren Wischstangenabschnitt 51 und dem vorderen Gelenkteilabschnitt 12 gebildet wird. Danach wird das Befestigungsteil 30 an das Gelenkteil 10 angenietet und die Schraubenfeder 40 in das Einhängeloch 60 und an dem Gelenkniet 20 eingehängt. Anschließend wird Lack 80 allseitig auf die gesamte Baueinheit aufgespritzt. Da aufgrund der aus Fig. 4 ersichtlichen Kegelform der Stößelenden 99 in der Windleitschaufel 70 die Aussparungen 75,76 an der Windleitschaufel 70 derart kegelförmig sind, daß die Kegelspitze in Richtung der Wischstange 50 zeigt, gelangt der Lack 80 auch problemlos auf die Mantelfläche der Aussparungen 75,76 sowie auf die im Bereich der Aussparungen 75,76 freiliegende Oberfläche 58 der Wischstange 50. Somit ist kostengünstig ein Wischarm geschaffen worden, der in aerodynamischer, sicherheitstechnischer und stilistischer Hinsicht erhöhte Ansprüche erfüllt und eine lange Gebrauchsdauer erwarten läßt.

S W F   A u t o - E l e c t r i c   G m b H

7120 Bietigheim-Bissingen

PAL/A 12 880

Szedzinski/TÜ

2.7.1985

Wischarm, insbesondere für Wischanlagen an Kraftfahrzeugen und Verfahren zu seiner Herstellung

Patentansprüche:

1. Wischarm, insbesondere für Wischanlagen an Kraftfahrzeugen, der eine Wischstange besitzt, welche aus einem harten, torsionsstabilen, vorzugsweise metallischen Werkstoff besteht und in eine einteilige Windleitschaufel eingebettet ist, dadurch gekennzeichnet, daß sich die Windleitschaufel (70) mit Ausnahme wenigstens einer kleinen Aussparung (75,76), welche sich bis zur Oberfläche (58) der Wischstange (50) erstreckt, über die gesamte Länge um den gesamten Umfang der Wischstange (50) erstreckt.

2. Wischarm nach Anspruch 1, dadurch gekennzeichnet, daß die Aussparung (75,76) quer zur Wischstangenlängsrichtung höchstens die gleiche Ausdehnung wie die Wischstange (50) besitzt und in Wischstangenlängsrichtung vorzugsweise die gleiche Ausdehnung wie quer zur Wischstangenlängsrichtung besitzt.

3. Wischarm nach Anspruch 2, dadurch gekennzeichnet, daß die Aussparung (75,76) eine wenigstens annähernd kegelförmige Gestalt besitzt, wobei die Kegelspitze in Richtung der Wischstange (50) zeigt.

4. Wischarm nach einem der vorhergehenden Ansprüche, dadurch gekennzeichnet, daß an zwei jeweils wenigstens annähernd am Ende eines Drittels der Windleitschaufellänge befindlichen Stellen jeweils eine Aussparung (75,76) vorgesehen ist.

5. Wischarm nach wenigstens einem der vorhergehenden Ansprüche, dadurch gekennzeichnet, daß die Aussparung (75,76) an der der Windanströmrichtung (A) abgewandten Seite angeformt ist.

6. Wischarm nach wenigstens einem der vorhergehenden Ansprüche, dadurch gekennzeichnet, daß die Windleitschaufel (70) an der in Windanströmrichtung (A) zugekehrten Seite und an der der Windanströmrichtung (A) abgekehrten Seite wenigstens annähernd gleich dick ausgebildet ist.

7. Wischarm nach wenigstens einem der vorhergehenden Ansprüche, dadurch gekennzeichnet, daß sich die Windleitschaufel (70) über einen großen Bereich (50) der Längenausdehnung der Wischstange (50) erstreckt.

8. Wischarm nach wenigstens einem der vorhergehenden Ansprüche, dadurch gekennzeichnet, daß die Windleitschaufel (70) wenigstens eine Ausformung (71,72) aufweist, welche mit einer korrespondierend geformten Ausformung (56,57) an der Wischstange (50) zusammenwirkt.

9. Wischarm nach Anspruch 8, dadurch gekennzeichnet, daß die Ausformung (56,57) an der Wischstange (50) als Durchbruch ausgebildet ist.

10. Wischarm nach wenigstens einem der vorhergehenden Ansprüche, dadurch gekennzeichnet, daß die Windleitschaufel (70) aus einem nach dem Einbetten der Wischstange (50) relativ starren, vorzugsweise spritzgußfähigen Kunststoff, insbesondere aus einem Polyamid besteht.

11. Wischarm nach wenigstens einem der vorhergehenden Ansprüche, dadurch gekennzeichnet, daß die Wischstange (50) aus einem Federbandstahl besteht.

12. Wischarm nach wenigstens einem der vorhergehenden Ansprüche, dadurch gekennzeichnet, daß sich um die freiliegenden Oberflächen (77,58) der

Windleitschaufel (70) und der Wischstange (50) ein Schutzüberzug (80) erstreckt.

13. Wischarm nach Anspruch 12, dadurch gekennzeichnet, daß der Schutzüberzug (80) wenigstens annähernd die gleiche chemische, thermische und mechanische Beständigkeit wie ein Kraftfahrzeuglack aufweist.

14. Wischarm nach Anspruch 12 oder 13, dadurch gekennzeichnet, daß der Schutzüberzug (80) in der Farbe der Farbe des Kraftfahrzeugs angepaßt ist.

15. Wischarm nach einem der Ansprüche 12 bis 14, dadurch gekennzeichnet, daß der Schutzüberzug (80) ein Lack ist.

16. Verfahren zur Herstellung eines Wischarms gemäß Anspruch 1 oder einem der übrigen Ansprüche, dadurch gekennzeichnet, daß wenigstens eine Wischstange (50) in einer zweiteiligen Werkzeugform (90) positioniert wird, welche in beiden Teilen (91,92) jeweils wenigstens eine Mulde (93,94) aufweist, wobei jeweils zwei Mulden (93,94) nach dem Schließen der Form (90) einen Hohlraum (95) bilden, dessen Umriß dem Umriß einer Windleitschaufel (70) entspricht und welche wenigstens einen in den Hohlraum (95) ragenden Vorsprung (99) aufweist, an dem die Wischstange (50) anliegt, daß der Hohlraum mit Windleitschaufelmaterial gefüllt wird und daß danach die Werkzeugform (90) geöffnet und die in die Windleitschaufel (70) eingebettete Wischstange (50) entnommen wird.

17. Verfahren nach Anspruch 15, dadurch gekennzeichnet, daß der Vorsprung (99) beweglich in der Werkzeugform (90) gelagert ist und vorzugsweise automatisch in den leeren Hohlraum (95) geschoben und aus dem gefüllten Hohlraum (95) zurückgezogen wird.

18. Verfahren nach Anspruch 16 oder 17 zur Herstellung eines Wischarms nach Anspruch 10, dadurch gekennzeichnet, daß der Vorsprung (99) derart in der Werkzeugform (90) positioniert ist, daß er dem Spritzdruck des Windleitschaufelmaterials entgegenwirkt.

19. Verfahren nach einem der Ansprüche 16 bis 18 zur Herstellung eines Wischarms nach Anspruch 8, dadurch gekennzeichnet, daß zuerst wenigstens

A 12 880                                        - 4 -

eine Wischstange (50) mit einer Ausformung (56,57) versehen wird, daß die
Wischstange (50) danach gegebenenfalls in bestimmten Bereichen (51,53,54)
gebogen wird und daß die Wischstange (50) danach ohne vorherige
Oberflächenbearbeitung in Windleitschaufelmaterial eingebettet wird.

20. Verfahren nach Anspruch 19 zur Herstellung eines Wischarms nach
Anspruch 15, dadurch gekennzeichnet, daß anschließend Lack (80) auf die
freiliegenden Oberflächen (58,77) von Wischstange (50) und Windleitschaufel
(70) aufgespritzt wird.

# Fig. 2

# Fig. 3

# Fig. 1

0210420

Fig. 4

2/2

0210420

## Europäisches Patentamt

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| Y | DE-A-3 346 384 (S.W.F.)<br><br>* Seite 13, Zeile 1 - Seite 14, Zeile 19; Seite 17, Zeilen 1-15; Seite 18, Zeilen 8-26; Figuren 1,5,6,12,13 *<br><br>--- | 1-4,6-11,16,18 | B 60 S 1/32<br>B 29 C 45/14 |
| Y | FR-A-2 368 346 (FAYET)<br><br>* Insgesamt *<br><br>--- | 1-4,6-11,16 | |
| Y | GB-A-2 103 534 (OMRON TATEISI)<br><br>* Seite 1, Zeilen 10-49; Seite 2, Zeilen 4-52; Seite 3, Zeilen 8-48; Figuren 1-4,6 * | 1,16,18 | |
| A | | 17 | RECHERCHIERTE SACHGEBIETE (Int. Cl.4)<br><br>B 60 S<br>B 29 C |

-----

Der vorliegende Recherchenbericht wurde für alle Patentansprüche erstellt.

| Recherchenort | Abschlußdatum der Recherche | Prüfer |
|---|---|---|
| DEN HAAG | 27-10-1986 | VERLEYE J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82